# EUROPEAN PATENT APPLICATION

(11) **EP 2 366 883 A1**
(43) Date of publication of application: **21.09.2011**
(21) Application number: 11157605.4
(22) Date of filing: 10.03.2011
(51) Int. Cl.: F02M 25/07, F02M 35/10, F02B 29/04, F02B 47/02

(54) **Arrangement for handling condensate of a supercharged combustion engine**

(30) Priority: 16.03.2010 SE 1050237
(71) Applicant: Scania CV AB, 151 87 Södertälje (SE)
(72) Inventor: Kardos, Zoltan, 151 35 Södertälje (SE)

(57) **Abstract**

The present invention relates to an arrangement for handling condensate of a supercharged combustion engine. The arrangement comprises a space (9d, 15d) in the cooler (9, 15) for accumulation of condensate, an injection means (26) adapted, via at least one outlet aperture (27), to injecting the condensate in a finely divided form in the inlet line (8), and a line (21, 23) adapted to leading the condensate from the space (9d, 15d) in the cooler (9, 15) to the injection means (26). The injection means (26) extends into the inlet line (8) so that said outlet aperture (27) delivers the condensate in a finely divided form at a distance from an internal wall surface (8a) of the inlet line (8).

## Description

### BACKGROUND TO THE INVENTION AND PRIOR ART

The present invention relates to an arrangement for handling condensate of a supercharged combustion engine according to the preamble of claim 1.

In order to supply as large an amount of air as possible to a supercharged combustion engine, the air is compressed to a high pressure before it is led into the combustion engine. However, compressing the air causes it to undergo a temperature rise. As the amount of air which can be supplied to a combustion engine depends also on the temperature of the air, the compressed air is cooled in at least one charge air cooler before it is led to the combustion engine. The technique called EGR (exhaust gas recirculation) is a known way of leading back part of the exhaust gases from a combustion process in a combustion engine. A mixture of air and exhaust gases is thus supplied to the cylinders of the combustion engine. Adding exhaust gases to the air causes a lower combustion temperature, resulting inter alia in a reduced content of nitrogen oxides NOₓ in the exhaust gases. This technique is used for both diesel engines and Otto engines. In cases where EGR technology is used, the returned exhaust gases are cooled in one or more EGR coolers before being led to the combustion engine. It is advantageous to cool the recirculating exhaust gases to the same low temperature as the compressed air.

The compressed air cooled in the charge air cooler contains water vapour in an amount which is related to the moisture content of the surrounding air. When the compressed air is cooled to a temperature below the condensation temperature of the water vapour, water in liquid form precipitates in the charge air cooler. Exhaust gases contain a relatively large amount of water vapour. Combustion of fossil fuels results mainly in the formation of carbon dioxide and water. The exhaust gases therefore usually contain significantly more water vapour than the compressed air. When the recirculating exhaust gases are cooled to a temperature below the condensation temperature of the water vapour, water in liquid form precipitates in the charge air cooler. This entails risk that large amounts of condensate from the charge air cooler and the EGR cooler may accumulate in the inlet line to the combustion engine. In for example situations where the flow of compressed air and recirculating exhaust gases increases in the inlet line, a relatively large amount of condensate may suddenly accompany the flow into the cylinders of the combustion engine. This entails risk of damage to the combustion engine.

### SUMMARY OF THE INVENTION

The object of the present invention is to propose an arrangement which makes it possible for condensate formed in a charge air cooler and/or in an EGR cooler to be handled in such a way as to substantially eliminate the risk that the condensate might damage the combustion engine.

This object is achieved with the arrangement of the kind mentioned in the introduction which is characterised by the features indicated in the characterising part of claim 1. According to the present invention, the condensate formed in the cooler is gathered in a space. The condensate gathered is led through a line from the space to an injection means which injects the condensate in a finely divided form at a distance from the internal wall surface of the inlet line. The finely divided condensate injected into the inlet line then accompanies the flow of air and exhaust gases to the combustion engine. In this case, the condensate formed in the cooler is substantially continuously led away from the space and injected into the inlet line in a finely divided form. Injecting the finely divided condensate at a distance from an internal wall surface in the inlet line provides substantial assurance that it will accompany the flow in the inlet line to the combustion engine. Accumulations of large amounts of condensate in the inlet line which might suddenly accompany the flow to the combustion engine are thus prevented. As both the recirculating exhaust gases and the compressed air may contain considerable amounts of water vapour, the condensate formed in the respective coolers is handled in substantially the same way.

According to a preferred embodiment of the present invention, the outlet aperture of the injection means is situated at a shorter distance from a central axis extending through the inlet line than an internal wall surface of the inlet line. In this case the outlet aperture is positioned substantially centrally within the inlet line. The distance from the internal surfaces of the inlet line is therefore optimum in all directions. There is therefore little risk of the finely divided condensate reaching the internal wall surface instead of accompanying the flow in the inlet line.

According to another embodiment of the invention, the outlet aperture of the injection means is provided with a netlike structure adapted to finely dividing the condensate when it is injected into the inlet line. Such a netlike structure comprises portions which constitute a large number of holes. When the condensate reaches a reticulated structure with a suitable configuration, it becomes finely divided. When the flow in the inlet line meets the injected condensate, it becomes still more finely divided. Alternatively, or in combination, the outlet aperture of the injection means may be at an angle to the main direction of flow in the inlet line. Such an angled outlet aperture results in more contact surface between the condensate leaving the outlet aperture and the flow in the inlet line. The result is effective fine division of the condensate when it meets the flow in the inlet line. Alternatively, the injection means may comprise a plurality of outlet apertures situated at a distance from one another and so directed that the condensate can be injected in different directions into the inlet line. The condensate is thus divided into a corresponding number of jets which enter the inlet line at a distance from one another and in different directions. Each of said jets is finely divided in an effective way by the flow in the inlet line.

According to another embodiment of the invention, the arrangement comprises pressure-lowering means adapted to causing a locally lower static pressure close to the aperture of the injection means than the pressure prevailing in said space in the cooler. With advantage, the condensate is led to a location in the inlet line where a pressure prevails which is lower than the pressure in the cooler. Such a pressure difference results in a force which substantially continuously draws the condensate from the space in the cooler to the inlet line. The pressure in an EGR cooler is normally higher than in the inlet line, at least if the combustion engine is an Otto engine. In such cases the condensate may be drawn from the space in the EGR cooler to the injection means without auxiliary means. As the charge air cooler is situated in the inlet line, the pressure is substantially the same in the charge air cooler as in downstream portions of the inlet line. In this case some form of pressure-lowering means has to be provided in the inlet line to make it possible for condensate to be drawn from the space in the charge air cooler. Said pressure-lowering means may comprise a venturi and the outlet aperture of the injection means may be situated in a portion of said venturi which has a reduced cross-sectional area. In a portion with reduced portion cross-sectional area, the velocity of the flow in the inlet line is increased, causing the static pressure to decrease. The result in said portion is a negative pressure which draws condensate from the space in the charge air cooler to the venturi. Alternatively, the inlet line may itself comprise a portion with reduced cross-sectional area close to the outlet aperture of the injection means.

According to another embodiment of the invention, the cooler comprises an inlet tank to receive air or the recirculating exhaust gases, a cooler portion in which air or the exhaust gases are cooled, and an outlet tank to receive cooled air or cooled exhaust gases. Both the charge air cooler and the EGR cooler may be structured in this way. With advantage, the space for accumulation of condensate is situated at a lower portion of the cooler's outlet tank. After the cooling, the compressed air or the exhaust gases is/are received in the outlet tank. All condensate formed in the cooler has therefore to pass through the outlet tank. As the condensate is of definitely higher density than the air and the exhaust gases, it runs down in the outlet tank to a bottom surface where it accumulates in said space. Said cooler may be situated at a location such that it is cooled by air at the temperature of the surroundings. Both the charge air cooler and the EGR cooler are with advantage so positioned that the compressed air and the exhaust gases are cooled to as low a temperature as possible. The exhaust gases and the air thus assume a low specific volume making it possible for the combustion engine to receive a large amount of air and exhaust gases. Particularly in situations where the surroundings are at a low temperature, relatively large amounts of condensate are formed in charge air coolers and EGR coolers which are cooled by air at the temperature of the surroundings.

### BRIEF DESCRIPTION OF THE DRAWINGS

Preferred embodiments of the invention are described below by way of examples with reference to the attached drawings, in which:
- Fig. 1: depicts an arrangement for handling condensate of a supercharged combustion engine,
- Fig. 2: depicts an EGR cooler of the arrangement in more detail,
- Fig. 3: depicts an injection means of the arrangement according to a first embodiment,
- Fig. 4: depicts an injection means of the arrangement according to a second embodiment and
- Fig. 5: depicts an injection means of the arrangement according to a third embodiment.

### DETAILED DESCRIPTION OF PREFERRED EMBODIMENTS OF THE INVENTION

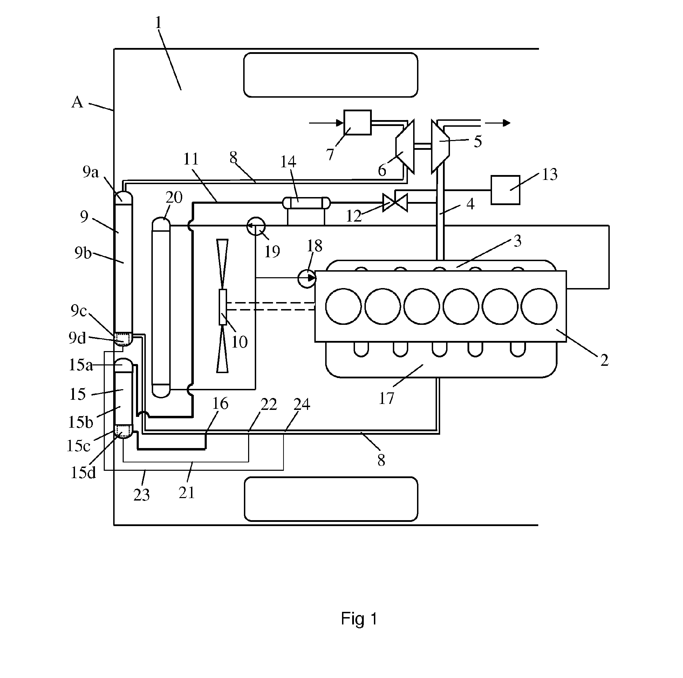

Fig. 1 depicts an arrangement for handling condensate of a supercharged combustion engine 2 in a vehicle 1 which may be a heavy vehicle 1. The exhaust gases from the cylinders of the combustion engine 2 are led via an exhaust manifold 3 to an exhaust line 4. The exhaust gases in the exhaust line 4, which are at above atmospheric pressure, are led to a turbine 5 of a turbo unit. The turbo unit comprises also a compressor 6. The compressor 6 compresses air which is led via an air filter 7 into an inlet line 8 to the combustion engine 2. The inlet line 8 comprises a charge air cooler 9 situated in a peripheral region A of the vehicle 1. The peripheral region A is in this case a front portion of the vehicle 1. The purpose of the charge air cooler 9 is to cool the compressed air before it is led to the combustion engine 2. The compressed air is cooled in the charge air cooler 9 by surrounding air which is caused to flow through the charge air cooler 9 by a radiator fan 10. The radiator fan 10 is driven by the combustion engine 2 via a suitable connection.

The arrangement comprises a return line 11 for recirculation of exhaust gases. Such recirculation is usually called EGR (exhaust gas recirculation). Adding exhaust gases to the compressed air led to the cylinders of the combustion engine lowers the combustion temperature and hence also the content of nitrogen oxides NOₓ which are formed during the combustion processes. The return line 11 has an extent between the exhaust line 4 and the inlet line 8. The return line 11 comprises an EGR valve 12 by which the exhaust flow in the return line 11 can be shut off. The EGR valve 12 may also be used to steplessly control the amount of exhaust gases led from the exhaust line 4 to the inlet line 8 via the return line 11. A control unit 13 is adapted to controlling the EGR valve on the basis of information about the current operating state of the combustion engine 2. The control unit 13 may be a computer unit provided with suitable software. The return line 11 comprises a first EGR cooler 14 to subject the recirculating exhaust gases to the first step of cooling and a second EGR cooler 15 to subject the recirculating exhaust gases to a second step of cooling.

In supercharged diesel engines, in certain operating situations, the pressure of the exhaust gases in the exhaust line 4 is lower than the pressure of the compressed air in the inlet line 8. In such situations it is not possible to mix the recirculating exhaust gases in the return line 11 directly with the compressed air in the inlet line 8 without special auxiliary means. To this end, auxiliary means such as a turbine 5 with variable geometry or a venturi may be used. If the combustion engine 2 is instead a supercharged Otto engine, the exhaust gases in the return line 11 can be led directly into the inlet line 8, since the exhaust gases in the exhaust line 4 of an Otto engine in substantially all operating situations are at a higher pressure than the compressed air in the inlet line 8. The recirculating exhaust gases are mixed with the compressed air in the inlet line at a location 16. The mixture of air and exhaust gases then proceeds in the inlet line 8 to a manifold 17 which leads the mixture to the respective cylinders of the combustion engine 2.

The combustion engine 2 is cooled in a conventional way by a cooling system which contains a circulating coolant. The coolant is circulated in the cooling system by a coolant pump 18. A cooling system comprises also a thermostat 19 and a radiator 20 which is fitted at a forward portion of the vehicle 1 behind the charge air cooler 9. The second EGR cooler 15 comprises a space 15d for accumulation of condensate. A first condensate line 21 is adapted to leading condensate from the space 15d to a location 22 in the inlet line 8. The charge air cooler 9 likewise comprises a space 9d for accumulation of condensate. A second condensate line 23 is adapted to leading condensate from the space 15d to a location 24 in the inlet line 8.

During operation of the combustion engine 2, the exhaust gases in the exhaust line 4 draw the turbine 5. The turbine 5 is thus provided with driving power to drive the compressor 6. The compressor 6 thereby compresses air which is led into the inlet line 8 via the air filter 7. Compressing the air subjects it to temperature rise. The compressed air is led to the charge air cooler 9, in which it is cooled. The charge air cooler 9 is therefore situated in a peripheral region A at a forward portion of the vehicle 1. The compressed air is thus cooled by air at the temperature of the surroundings in the charge air cooler 9. The compressed air may here be cooled to a temperature which is only a few degrees above the temperature of the surroundings.

In most operating states of the combustion engine 2, the control unit 13 keeps the EGR valve 12 open so that part of the exhaust gases in the exhaust line 4 is led into the return line 11. The exhaust gases in the exhaust line 4 are usually at a temperature of about 500-600°C when they reach the first EGR cooler 14. The exhaust gases are here subjected to a first step of cooling in the first EGR cooler 14 by coolant from the combustion engine's cooling system. The recirculating exhaust gases are thereafter led to the second EGR cooler 15 which is situated in a peripheral region A of the vehicle alongside the charge air cooler 9. The recirculating exhaust gases are cooled in the second EGR cooler 15 by air at the temperature of the surroundings. A suitably dimensioned second EGR cooler 15 can cool the returned exhaust gases to a temperature just above the temperature of the surroundings. Exhaust gases in the return line 11 may therefore undergo cooling to substantially the same low temperature as the compressed air in the charge air cooler 9. The recirculating exhaust gases are thereafter led to the location 16 in the inlet line 8 and are mixed with the compressed air. The mixture of exhaust gases and compressed air is thereafter led to the respective cylinders of the combustion engine 2 via the manifold 17.

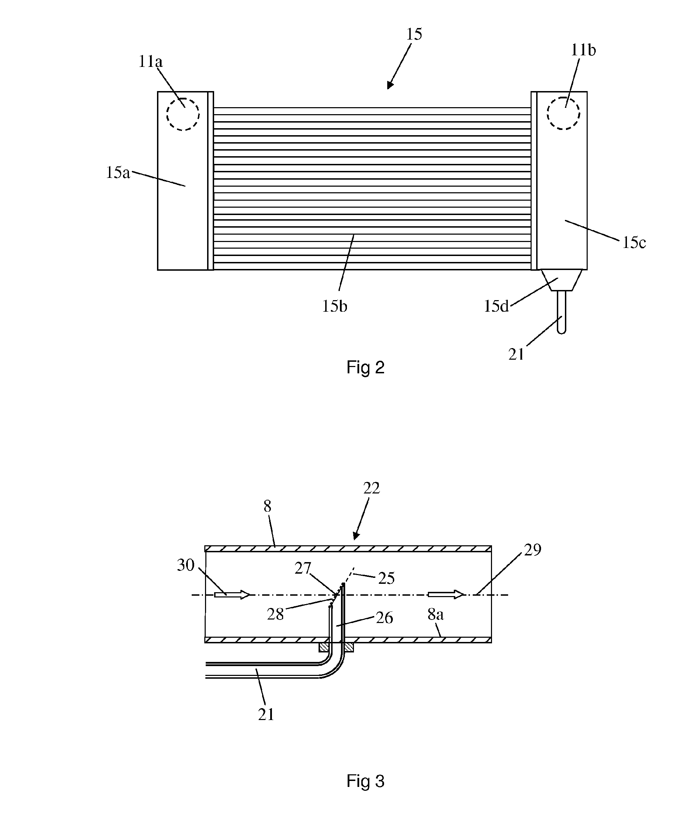

Exhaust gases contain a relatively large proportion of water vapour. When the recirculating exhaust gases are cooled in the second EGR cooler 15 by air at the temperature of the surroundings, they assume in many operating situations a lower temperature than the condensation temperature of the water vapour. Water in liquid form thereupon precipitates within the second EGR cooler 15. Fig. 2 depicts the second EGR cooler 15 in more detail. The second EGR cooler 15 comprises an inlet tank 15a which receives recirculating exhaust gases from the line 11 via an inlet aperture 11a. The EGR cooler 15 comprises a cooler package 15b extending between the inlet tank 15a and an outlet tank 15c which receives the exhaust gases after cooling in the cooler package 15b. The cooler package 15b comprises a plurality of tubular elements extending in a substantially rectilinear manner in a common plane between the inlet tank 15a and the outlet tank 15c. Air at the temperature of the surroundings is drawn through gaps between the tubular elements by the fan 10. The surrounding air thus cools the exhaust gases led through the tubular elements. The cooled exhaust gases leave the EGR cooler via an outlet aperture 11b situated at an upper portion of the outlet tank 15c. Said space 15d which receives condensate is situated at a lower portion of the outlet tank 15c. As the condensate formed is of higher density than the exhaust gases, it runs down and accumulates at a lower portion of the outlet tank 15c in said space 15d. A first end of the condensate line 21 is connected to an aperture in a bottom surface of said space 15d. The second end of the condensate line 21 is connected to the inlet line 8 at the location 22.

Fig. 3 shows the second end of the condensate line 21 here connected to a tubular injection means 26 which extends into the inlet line 8. The injection means 26 has an outlet aperture 27 covered by a netlike structure 28. The outlet aperture 27 is situated substantially centrally in the inlet line 8 close to a central axis 29 of the inlet line 8. The outlet aperture 27 is thus situated at a relatively large distance from an internal wall surface 8a of the inlet line 8. During normal operation of the combustion engine 2, the pressure in the inlet line 8 is lower than the pressure in the EGR cooler 15. This pressure difference results in condensate being drawn from the space 15d to the inlet line 8 via the first condensate line 21, the injection means 26 and the outlet aperture 27. The surfaces of the injection means 26 which constitute the outlet aperture 27 are here situated in a plane 25 which is at an angle to the main direction of flow 30 in the inlet line 8. The angle may be within the range 20°-70°. The flow in the inlet line 8 meets here the condensate which flows out through the outlet aperture 27 in an effective way which results in the condensate becoming finely divided. In this case the netlike structure 28 also effects a fine division of the condensate flowing out through the outlet aperture 27. Finely divided condensate is thus delivered at a distance from the internal wall surface of the inlet line. By these measures the finely divided condensate can be prevented from reaching the internal wall surface 8a and can be led substantially continuously to the combustion engine 2 in a finely divided form. There is thus substantially no risk of individual cylinders receiving in specific situations such large amounts of condensate that the combustion engine might be damaged.

The compressed air led to the charge air cooler 9 very often likewise contains a relatively large proportion of water vapour. When the compressed air is cooled in the charge air cooler 9 by air at the temperature of the surroundings, it assumes in many operating situations a lower temperature than the condensation temperature of the water vapour. Water in liquid form thereupon precipitates within the charge air cooler 9. The structure of the charge air cooler 9 is similar to that of the EGR cooler 15 in Fig. 2. The charge air cooler 9 thus comprises an inlet tank 9a which receives warm compressed air, a cooler package 9b, and an outlet tank 9c which receives the exhaust gases after cooling in the cooler package 9b. A space 9d for accumulation of condensate is here again provided at a lower portion of the outlet tank 9c. A first end of the second condensate line 23 is connected to an aperture in the bottom surface of said space 9d. The second end of the condensate line 23 is connected to the inlet line 8 at the location 24.

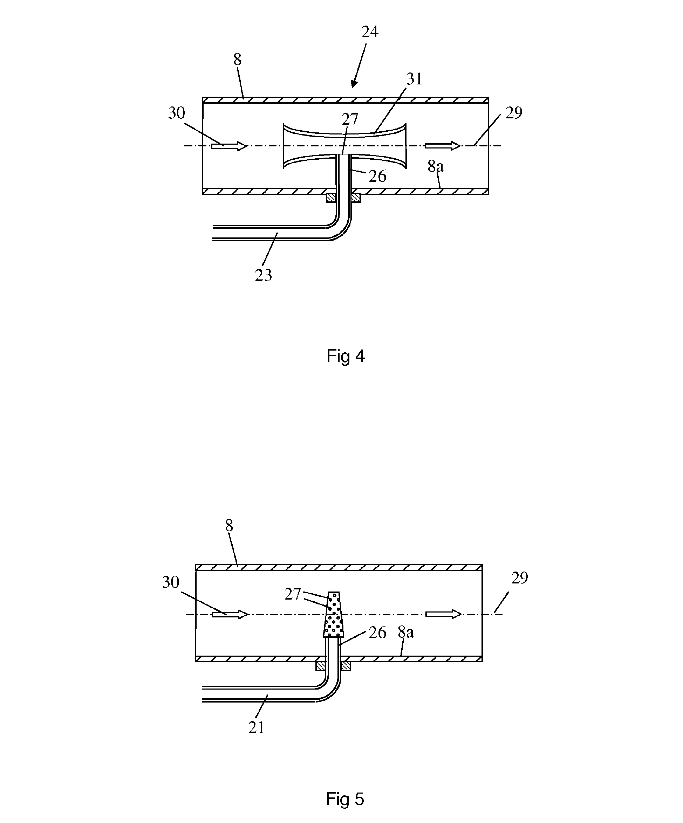

Fig. 4 shows the second end of the condensate line 23 here connected to a tubular injection means 26 which extends into the inlet line 8. In this case, the injection means 26 comprises an outlet aperture 27 leading to a venturi 31. A central axis 29 through the inlet line 8 extends through the venturi 31. The venturi 31 is thus situated substantially centrally within the inlet line 8. A venturi 31 is a pipe with a central portion which has a reduced cross-sectional area. When the mixture of compressed air and exhaust gases flows through a venturi 31, they assume a higher velocity in the central portion of the venturi 31. The static pressure therefore decreases in the central portion of the venturi 31, resulting in a lower pressure at the outlet aperture 27 than the pressure in the charge air cooler 9. This pressure difference causes condensate to be drawn from the space 9d to the central portion of the venturi 31 via the second condensate line 23, the injection means 26 and the outlet aperture 27. The condensate undergoes effective fine division within the venturi 31. In this case the condensate is thus delivered at a distance from the internal wall surface 8a of the inlet line and does at the same time become finely divided in an effective way. The condensate in the charge air cooler 9 can likewise therefore be led substantially continuously into the inlet line 8 and be led to the combustion engine 2 in a finely divided form.

Fig. 5 depicts an alternative embodiment of an injection means 26. The injection means 26 comprises in this case a conically shaped external surface provided with a very large number of outlet apertures 27. The outlet apertures 27 are disposed round substantially the whole conical surface. The outlet apertures 27 are situated within the inlet line 8 at a distance from its internal surface 8a. In this case the condensate is thus likewise led out in the inlet line 8 at a distance from its internal surface 8a. The condensate is injected into the inlet line 8 via a large number of apertures 27 situated at various points and at various angles relative to the flow 30 in the inlet line 8. The condensate is thus subject to effective fine division before it is carried off to the combustion engine 2.

The invention is in no way limited to the embodiments to which the drawings refer but may be varied freely within the scopes of the claims. In this case, condensate is led from both the EGR cooler 15 and the charge air cooler 9 to the inlet line 8. It is of course possible for only condensate from either the EGR cooler 15 or the charge air cooler 9 to be led to the inlet line 8. The embodiments of the injection means referred to above may of course be used for both injecting and finely dividing condensate from the charge air cooler and the EGR cooler. The amount of water vapour is definitely greater in the recirculating exhaust gases than in the compressed air. For this reason, significantly more condensate is usually formed in the EGR cooler than in the charge air cooler. It may therefore in many cases be sufficient to finely divide the condensate in the EGR cooler in the manner indicated above.

## Claims

1. An arrangement for handling condensate of a supercharged combustion engine (2), which arrangement comprises an exhaust line (4) adapted to leading exhaust gases out from the combustion engine (2), an inlet line (8) adapted to leading air at above atmospheric pressure to the combustion engine (2), a return line (11) connecting the exhaust line (4) to the inlet line (8) so that it is possible, via the return line (11), to recirculate exhaust gases from the exhaust line (4) to the inlet line (8), and a cooler (9, 15) for cooling the compressed air in the inlet line (8) and/or for cooling the recirculating exhaust gases in the return line (11), **characterised in that** the arrangement comprises a space (9d, 15d) in the cooler (9, 15) for accumulation of condensate, an injection means (26) adapted, via at least one outlet aperture (27), to injecting the condensate in a finely divided form in the inlet line (8), and a line (21, 23) adapted to leading the condensate from the space (9d, 15d) in the cooler (9, 15) to the injection means (26), which injection means (26) extends into the inlet line (8) so that said outlet aperture (27) delivers the condensate in a finely divided form at a distance from an internal wall surface (8a) of the inlet line (8).

2. An arrangement according to claim 1, **characterised in that** the outlet aperture (27) of the injection means (26) is situated at a shorter distance from a central axis (29) which extends through the inlet line (8) than an internal wall surface (8a) of the inlet line (8).

3. An arrangement according to claim 1 or 2, **characterised in that** the outlet aperture (27) of the injection means (26) is provided with a netlike structure (28) adapted to finely dividing the condensate when it is injected into the inlet line (8).

4. An arrangement according to any one of the foregoing claims, **characterised in that** the outlet aperture (27) of the injection means (26) is at an angle to the main direction of flow (30) in the inlet line (8).

5. An arrangement according to claim 4, **characterised in that** the injection means (26) comprises a plurality of outlet apertures (27) situated at a distance from another and so directed that the condensate can be injected in different directions into the inlet line (8).

6. An arrangement according to any one of the foregoing claims, **characterised in that** the arrangement comprises pressure-lowering means (31) adapted to causing a locally lower static pressure close to the outlet aperture (27) of the injection means (26) than the pressure which prevails in said space (9d, 15d).

7. An arrangement according to claim 6, **characterised in that** said pressure-lowering means comprises a venturi (31) and that the outlet aperture (27) of the injection means (26) is situated in a portion of said venturi (31) which has a reduced cross-sectional area.

8. An arrangement according to any one of the foregoing claims, **characterised in that** the cooler (9, 15) comprises an inlet tank (9a, 15a) for receiving air or the recirculating exhaust gases, a cooler portion (9b, 15b) in which the air or the exhaust gases are cooled, and an outlet tank (9c, 15c) for receiving cooled air or cooled exhaust gases.

9. An arrangement according to claim 8, **characterised in that** said space (9d, 15d) for accumulation of condensate is situated at a lower portion of the cooler's outlet tank (9c, 15c).

10. An arrangement according to any one of the foregoing claims, **characterised in that** the cooler (9, 15) is situated at a location such that it is cooled by air at the temperature of the surroundings.
